(19) Europäisches Patentamt / European Patent Office / Office européen des brevets

(11) **EP 2 198 144 B1**

(12) **FASCICULE DE BREVET EUROPEEN**

(45) Date de publication et mention
de la délivrance du brevet:
**22.06.2011 Bulletin 2011/25**

(21) Numéro de dépôt: **08805042.2**

(22) Date de dépôt: **03.10.2008**

(51) Int Cl.:
**F02K 9/46** $^{(2006.01)}$

(86) Numéro de dépôt international:
**PCT/EP2008/063283**

(87) Numéro de publication internationale:
**WO 2009/047218 (16.04.2009 Gazette 2009/16)**

(54) **DISPOSITIF DE MOTORISATION DE POMPE POUR MOTEUR FUSEE PAR ROUE D'INERTIE**

VORRICHTUNG FÜR DEN BETRIEB DER PUMPE EINES RAKETENTRIEBWERKS MIT EINEM SCHWUNGRAD

DEVICE FOR POWERING THE PUMP OF A ROCKET ENGINE USING AN INERTIA WHEEL

(84) Etats contractants désignés:
**AT BE BG CH CY CZ DE DK EE ES FI GB GR HR HU IE IS IT LI LT LU LV MC MT NL NO PL PT RO SE SI SK TR**

(30) Priorité: **08.10.2007 FR 0758133**

(43) Date de publication de la demande:
**23.06.2010 Bulletin 2010/25**

(73) Titulaire: **ASTRIUM SAS**
**75016 Paris (FR)**

(72) Inventeur: **RAYMOND, Gérald**
**F-33160 Saint Medard En Jalles (FR)**

(74) Mandataire: **Maupilier, Didier**
**Schmit Chretien SNC**
**111 Cours du Médoc**
**CS 400009**
**33070 Bordeaux Cedex (FR)**

(56) Documents cités:
**DE-B1- 1 626 082    US-A- 3 862 732**
**US-B1- 6 457 306**

## Description

La présente invention concerne un dispositif et un procédé de motorisation de pompe pour moteur fusée par roue d'inertie.

Le domaine technique concerné par la présente invention est celui de la propulsion fusée capable d'une forte poussée, comme celle nécessaire à un lanceur spatial.

Pour ce type d'application, il existe trois familles de technologies, selon l'état physique des ergols utilisés, la propulsion solide, où l'ergol est stocké dans une chambre de combustion, la propulsion liquide qui peut utiliser un, deux voire plus d'ergols, où l'on doit transférer des ergols de réservoirs de stockage vers une chambre de combustion et la propulsion hybride qui utilise un ergol liquide et un ergol solide, et où l'on doit transférer un ergol liquide vers une chambre de combustion où est stocké un ergol solide.

La présente invention concerne plus précisément les dispositifs de transfert des ergols liquides vers la chambre de combustion et plus particulièrement la motorisation de ce transfert.

Pour être capable d'assurer une forte poussée, les moteurs fusée doivent fonctionner à pression élevée de quelques dizaines de bars notamment de 30 à 50 bars pour les moteurs d'Ariane par exemple avec un débit de matière élevé.

Dans le cas de la propulsion liquide, c'est le système d'alimentation en ergol qui doit assurer ce débit et cette pression. Pour réaliser cette alimentation sous pression, deux moyens sont communément utilisés, la mise en pression directe des réservoirs d'ergols et le pompage par pompes à partir de réservoir basse pression.

La première solution possède le mérite de la simplicité mais demande des réservoirs susceptibles de tenir des pressions élevées, ce qui induit des problèmes de masse et de sécurité. Cette solution est en pratique réservée à des moteurs de faible puissance, tels que les moteur de contrôle d'attitude ou les étages supérieurs de lanceurs par exemple, où la mise en place d'un moyen externe de pressurisation est moins intéressante.

La seconde solution requiert l'utilisation de pompes spécifiques capable du débit important exigé par les moteurs. Ce débit, joint à la forte augmentation de pression demandée conduit à des pompes de puissance considérable, de plusieurs centaines de kilowatts à plusieurs mégawatts.

Dans les lanceurs spatiaux actuels et passés, la motorisation de ces pompes est faite systématiquement par des moteurs à turbine, utilisant généralement les mêmes ergols que le moteur principal.

Ces turbines sont entraînées par des gaz chauds. Ces gaz chauds sont généralement produits par prélèvement d'une partie des ergols du moteur fusée et combustion de ces prélèvements dans une petite chambre de combustion spécifique. Ils peuvent aussi être produits par un générateur de gaz, souvent un petit propulseur à poudre.

L'ensemble turbine/pompe est appelé turbopompe. La turbopompe est un objet complexe et fragile car il doit transmettre des puissances très élevées, plusieurs mégawatts, grâce à des vitesses de rotation très élevées, par exemple de 10 000 à 30 000 tr/mn, qui induisent des contraintes mécaniques très fortes dans les matériaux.

Par ailleurs, la motorisation par gaz chauds issus d'une combustion induit des températures très élevées côté turbine et des gradients de température très important dans les arbres de transmission entre la turbine et la pompe.

Cet effet de gradient thermique est encore accentué quand les ergols sont cryogéniques, la température côté pompe étant de quelques dizaines de degrés Kelvin alors qu'à quelques centimètres seulement, la température de la turbine moteur est à plus de 1000 degrés Celsius.

Enfin, du fait de ces conditions de fonctionnement extrêmes, le démarrage de la turbopompe est délicat avec une mise en froid d'un côté, en chaud de l'autre et mise en rotation de l'ensemble suffisamment progressive pour ne pas induire de gradient transitoire encore plus élevé susceptible de rompre la turbopompe.

Au final, la turbopompe est un objet très coûteux et à faible durée de vie, utilisé sur les lanceurs classiques qui ont une faible durée de fonctionnement qui se chiffre en minutes.

Sur les lanceurs réutilisables comme la navette spatiale actuellement en service, les turbopompes doivent être changées quasiment à chaque vol, ce qui est très lourd en terme de coût de maintenance.

Une solution proposée pour remplacer une turbopompe est décrite dans le document US 6 457 306.

Ce document décrit de remplacer la turbine d'entraînement de la pompe par un moteur électrique lui-même alimenté par des batteries, ou d'autres dispositifs comme des roues d'inertie.

De ce fait, on n'a plus besoin d'un petit moteur fusée entraînant une turbine, on consomme moins d'ergol, on n'a plus de gradients de températures si élevés et l'ensemble est plus fiable, et plus adapté à un lanceur réutilisable.

On peut de plus réguler la rotation du moteur électrique et donc faire varier les débits d'ergols et donc la poussée de façon plus aisée et on peut aussi gérer le démarrage de la pompe plus facilement pour éviter des gradients transitoires trop élevés.

Par contre la source d'énergie alimentant le moteur doit être capable de fournir une puissance se chiffrant en mégawatts durant la phase de poussée ce qui implique des contraintes de masse et de dimensionnement importantes pour cette source d'énergie et pour les moyens d'alimentation des moteurs électriques.

L'ensemble stockage d'énergie et moteur est finalement très lourd.

L'objectif de la présente invention est de fournir une motorisation pour pompe d'ergols simple, fiable, de poids réduit, pouvant être démarrée en vol et qui puisse en particulier être utilisée sur des ensembles de propulsion réutilisables.

Pour ce faire, l'invention propose de remplacer le moteur à turbine de la pompe ou le moteur électrique par un dispositif simple, indépendant des ergols, dont la mise en marche et la régulation notamment sont indépendantes du fonctionnement de l'ensemble de propulsion du véhicule et prévoit pour ce faire d'utiliser un dispositif à roue d'inertie préalablement mise en rotation pour motoriser la pompe.

Plus particulièrement l'invention concerne un dispositif de motorisation de pompe d'alimentation de moteur fusée de véhicule spatial caractérisé en ce qu'il comprend une roue d'inertie et un moyen de transmission de la rotation de la roue d'inertie à la pompe, la roue étant couplée mécaniquement à la pompe.

L'un des avantages majeurs de la roue d'inertie est sa simplicité de mise en oeuvre et le fait qu'elle stocke directement une énergie mécanique.

Préférablement, le moyen de transmission est un arbre commun entre la roue d'inertie et la pompe.

Avantageusement, le moyen de transmission comporte un dispositif de modification du rapport d'entraînement entre roue et pompe.

Selon un mode de réalisation particulier, le dispositif comporte un dispositif d'embrayage adapté à coupler et découpler la roue d'inertie de la pompe.

Selon un mode de réalisation avantageux, le dispositif comporte un moteur électrique de lancement de la roue.

Le moteur électrique est alimenté soit par une source électrique extérieure au véhicule, soit par une source électrique interne au véhicule, le moteur électrique permettant alors de conserver à la roue une énergie après le décollage du véhicule.

Selon un mode de réalisation particulier de l'invention, la pompe et la roue sont disposées dans le véhicule dans une position fournissant une stabilisation gyroscopique par leur rotation suivant au moins un axe du véhicule.

Selon un mode de réalisation alternatif, le dispositif comporte au moins une paire de roues identiques tournant en sens inverse pour supprimer les effets gyroscopiques de rotation des roues.

Avantageusement, le dispositif comporte des moyens de mesure de la vitesse de rotation de la roue et des moyens de désaccouplement de la roue et de la pompe pour une vitesse inférieure à une vitesse donnée inférieure à la vitesse de rotation nominale de la roue.

Selon un mode de réalisation avantageux, le dispositif comporte des moyens de régulation de débit de la pompe comportant un dispositif de prélèvement d'un débit variable sur le flux sortant de la pompe et de renvoi de ce flux dans le réservoir.

Alternativement ou de manière complémentaire, le dispositif comporte des moyens de régulation de débit de la pompe comportant une vanne placée en aval de la pompe.

Dans ce dernier cas, la vanne est préférablement une vanne réglable placée à la sortie de la pompe et adaptée à maintenir un débit constant en s'ouvrant progressivement.

Avantageusement, la roue est disposée dans un carter formant bouclier entre la roue et le réservoir.

L'invention concerne en outre un dispositif d'alimentation de moteur fusée caractérisé en ce qu'il comporte au moins deux pompes chacune motorisée par un dispositif selon l'invention et un avion spatial comportant un moteur fusée dont l'alimentation comprend au moins une pompe motorisée par un dispositif selon l'invention et des moyens de mise en fonction du dispositif, avion en vol.

D'autres caractéristiques et avantages de l'invention seront mieux compris à la lecture de la description qui suit d'un exemple de réalisation non limitatif de l'invention accompagné des dessins qui représentent:

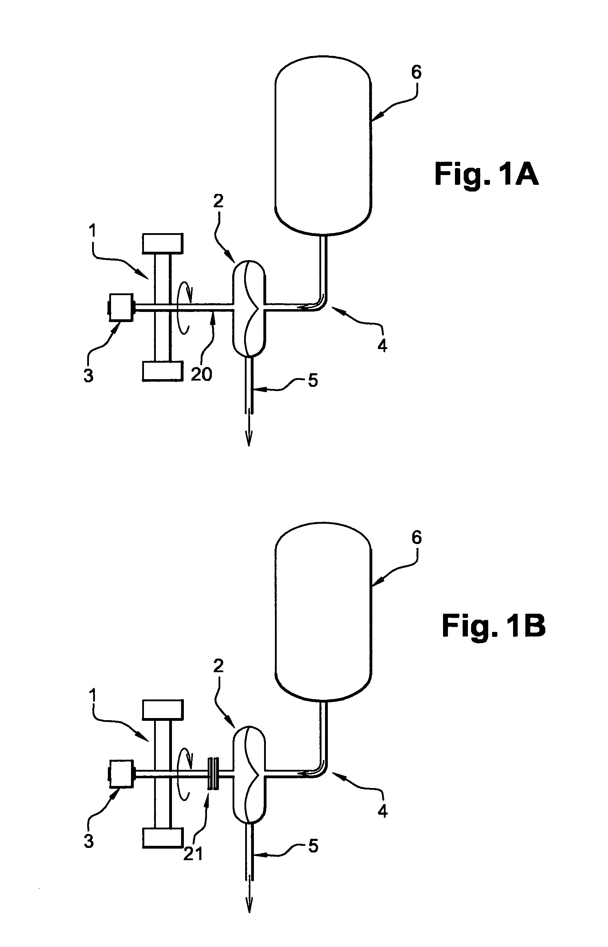

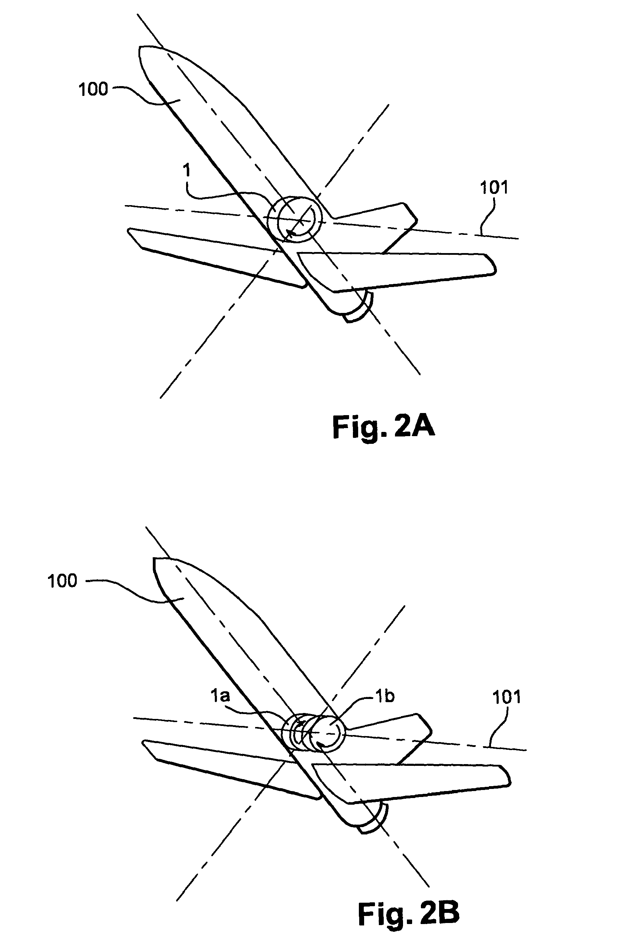

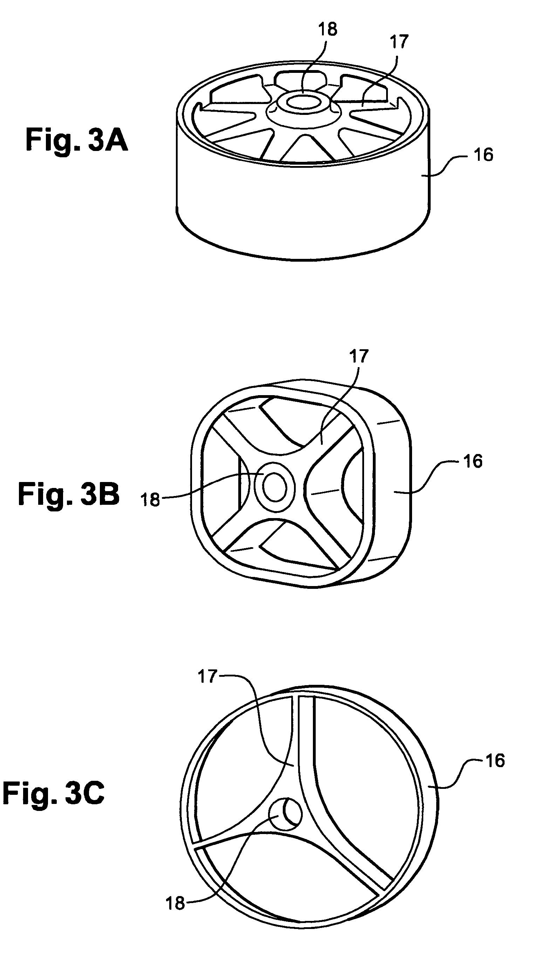

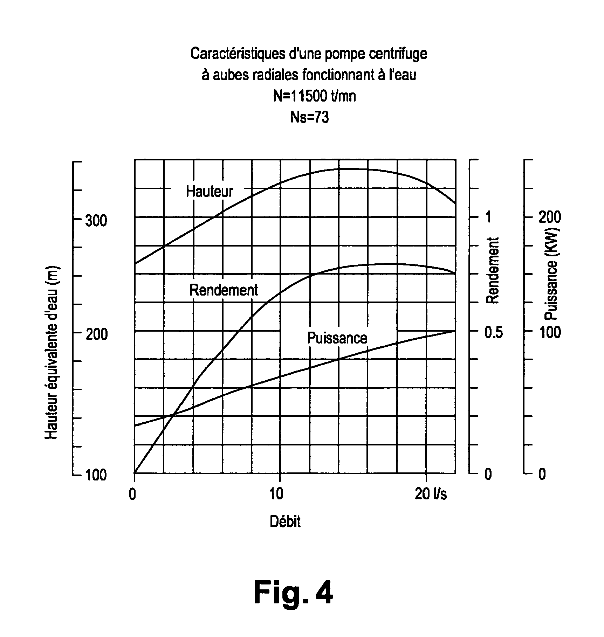

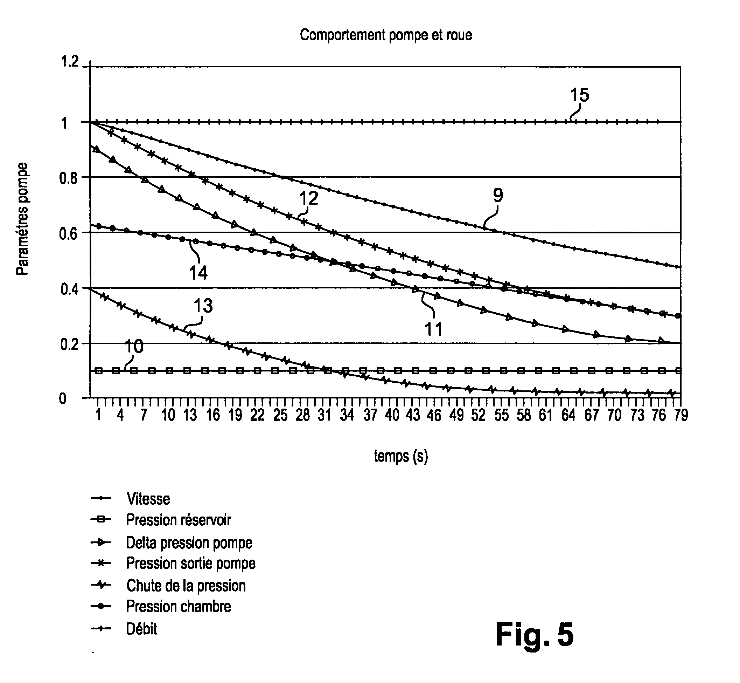

aux figures 1A à 1 F: une représentation schématique du principe du dispositif de l'invention selon différents modes de réalisation;
aux figures 2A et 2B: des exemples de d'implantation respectivement de une et deux roues d'inertie dans un aéronef;
aux figures 3A à 3C: des exemples de réalisation de roues d'inertie de l'invention;
en figure 4: un graphe des caractéristiques d'une pompe centrifuge entraînée par le dispositif de l'invention;
en figure 5: un graphique représentant les paramètres de fonctionnement du dispositif de l'invention en fonction du temps.

L'invention concerne les engins spatiaux et est applicable en particulier aux avions spatiaux.

Les avions spatiaux sont des lanceurs capables de décoller du sol comme un avion puis de quitter l'atmosphère terrestre pour atteindre l'espace.

Dans l'espace ces avions spatiaux utilisent un mode de propulsion anaérobie de type fusée. Pour leur vol atmosphérique ils utilisent des propulseurs aérobies comme des réacteurs.

Une roue d'inertie est comme son nom l'indique un objet que l'on fait tourner autour d'un axe, et qui sert à stocker de l'énergie sous une forme cinétique. L'énergie stockée est croissante avec le carré de la vitesse de rotation de la roue et proportionnelle à sa masse.

Pour stocker l'énergie, on fait donc tourner la roue le plus vite possible, la récupération de l'énergie ralentissant la rotation de la roue.

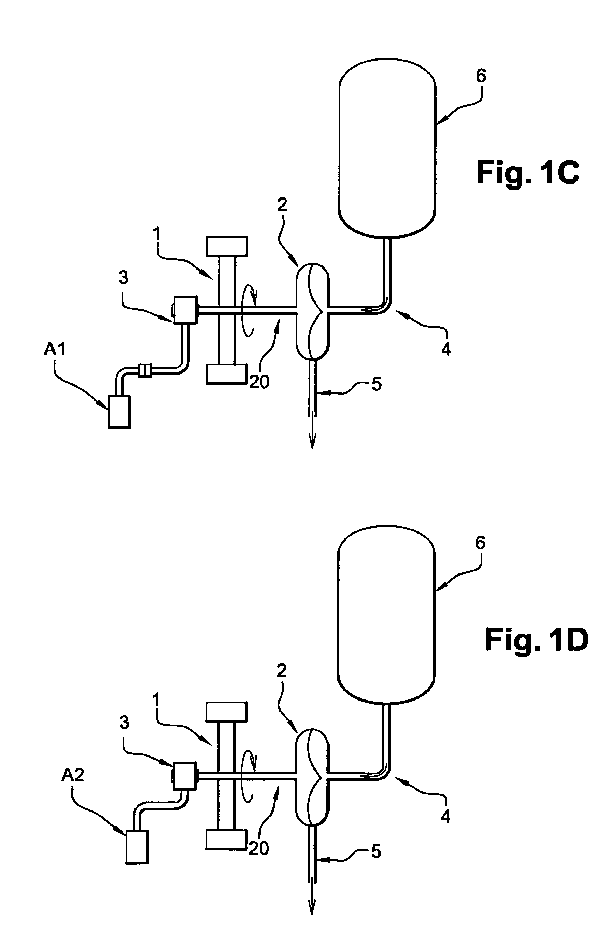

Selon l'exemple simplifié selon le schéma de principe représenté en figure 1A, la roue 1 est montée sur le même arbre 20 que la pompe 2 qu'elle doit entraîner. Elle est lancée avant le décollage du véhicule par un moteur de lancement 3 qui est soit alimenté par une source électrique extérieure A1 comme représentée en figure 1C, soit alimenté par une source électrique interne A2 représentée à la figure 1D quand le véhicule possède une génération électrique comme c'est le cas pour des véhicules suborbitaux ou des avions spatiaux possédant des moteurs aéronautiques conventionnels, des satellites avec panneaux solaires ou encore des lanceurs équipés de piles.

Quand cette énergie électrique est disponible à bord, le moteur électrique permet alors après le décollage de conserver à la roue son énergie nominale.

La pompe 2 reçoit le propergol du réservoir 6 au travers d'une tubulure d'amenée 4 et envoie le propergol sous pression par une tubulure de sortie 5 vers un moteur fusée traditionnel non représenté.

Les frottements sur les paliers et dans l'air (le rotor de la pompe est en rotation) sont suffisamment faibles pour ne nécessiter qu'une puissance modeste, quelques dizaines de Watts typiquement.

Dans le cas d'un avion spatial, le concepteur du véhicule peut se passer de source électrique interne si le temps entre le décollage et la mise en route du moteur est faible, par exemple moins d'une heure typiquement.

Arrivé à l'altitude de mise à feu du moteur fusée, la ou les pompes 2 sont mises en froid, puis les vannes des réservoirs sont ouvertes. La pression des réservoirs amorce les pompes et le moteur fusée est alimenté par celles-ci, leur rotation étant entretenue par la roue.

A l'issue de l'épuisement des ergols, la pompe et la roue continuent à tourner. Il peut y avoir avantage à les laisser en action durant le vol exo atmosphérique pour bénéficier de la stabilisation gyroscopique causée par leur rotation. Si par exemple comme représenté en figure 2A la roue 1 est montée suivant l'axe de tangage 101 du véhicule 100, elle procurera une stabilisation effective suivant les axes de roulis et de lacet.

Ainsi, dans le cas de l'installation du dispositif dans un avion spatial, le montage de la roue d'inertie suivant l'axe de tangage fournira une stabilité suivant les axes de roulis et de lacet.

Les manoeuvres de cabré ne seront par contre pas affectées.

A contrario, il est possible d'éviter des effets gyroscopiques en couplant mécaniquement deux roues identiques tournant en sens inverse comme représenté en figure 2B ou des roues 1a et 1b sont positionnées sur l'axe de tangage 101 du véhicule 100 et contrarotatives.

L'invention évite l'usage d'un moteur à turbine et les problèmes de démarrage associés, avec ou sans utilisation de moyens pyrotechniques, les difficultés d'alimentation de la turbine, les problèmes de stabilisation de fonctionnement de la turbine couplée avec la pompe.

La roue d'inertie offrant une vitesse de rotation stable par nature permet en outre un fonctionnement stabilisé sans nécessiter de régulation autre que celle due à la compensation de la décélération continue de la roue.

De plus, le dispositif de l'invention évite les problèmes de couplage sur le même axe de zones très chaudes et très froides.

Une contrainte du système à roue d'inertie est le fait que la vitesse de la roue diminue au fur et à mesure que l'énergie en est extraite.

La figure 4 illustre les paramètres de fonctionnement d'une pompe centrifuge à aubes radiales telle qu'utilisée pour l'alimentation des moteurs fusées.

Le débit d'une telle pompe centrifuge est proportionnel à sa vitesse de rotation et la pression de sortie de pompe est proportionnelle au carré de la vitesse de rotation de la roue.

La conséquence directe lorsque une roue d'inertie est couplée mécaniquement aux pompes est que, comme le débit de celles-ci est proportionnel à la vitesse de rotation de la roue, le débit diminue donc proportionnellement à la diminution de vitesse de la roue et la pression diminue proportionnellement au carré de la diminution de la vitesse de la roue lorsqu'elle ralentit.

En général, le fait que le débit diminue dans le temps et donc que la poussée diminue n'est pas directement pénalisant du fait que la masse du véhicule diminue aussi du fait de la consommation des ergols.

La diminution du débit évite dans un tel cas un accroissement continu de l'accélération du véhicule.

Ceci n'est pénalisant que pour les moteurs fusées conçus pour un fonctionnement optimal autour d'un débit quasi constant.

De même, la baisse de pression de sortie de la pompe diminue la pression dans la chambre de combustion. Ce phénomène perturbe toutefois moins le fonctionnement du moteur que les variations de débit mais réduit la poussée en proportion.

Pour traiter ces problèmes, l'invention prévoit plusieurs solutions selon le moteur particulier considéré.

Une première solution consiste à réduire la plage de vitesse de la roue pour laquelle on extrait de la puissance et on fait tourner la pompe.

On définit Vmax comme la vitesse maximale à laquelle est lancée la roue, 0,5Vmax la moitié de cette vitesse atteinte après un temps de rotation de la roue donné et nVmax, n<1, vitesse rapportée à Vmax à un instant donné.

Au lieu d'extraire l'énergie entre Vmax et 0,5 Vmax, il est possible de n'utiliser la roue qu'entre Vmax et n.Vmax, n plus grand que 0,5. Pour pouvoir en retirer la quantité d'énergie requise, la roue doit en emmagasiner d'avantage, donc être plus lourde.

Pour mettre cette méthode en application on dispose un embrayage 21 entre la roue et la pompe comme illustré par la figure 1B.

Dans cette variante de l'invention, le moyen de transmission de la rotation de la roue 1 vers la pompe 2 comporte des demi arbres 2a, 20b pouvant être couplés et découplés au travers de l'embrayage 21.

Ceci permet notamment en outre de lancer la roue 1 avec le moteur 3, pompe débrayée au moyen d'une alimentation électrique externe A1 avant le vol puis en cours du vol de coupler la roue et la pompe pour faire fonctionner cette dernière.

L'embrayage peut être remplacé ou complété par un dispositif de modification du rapport d'entraînement entre roue et pompe tel qu'un variateur pour limiter la variation de débit sur une plage de régimes de rotation de la roue plus large.

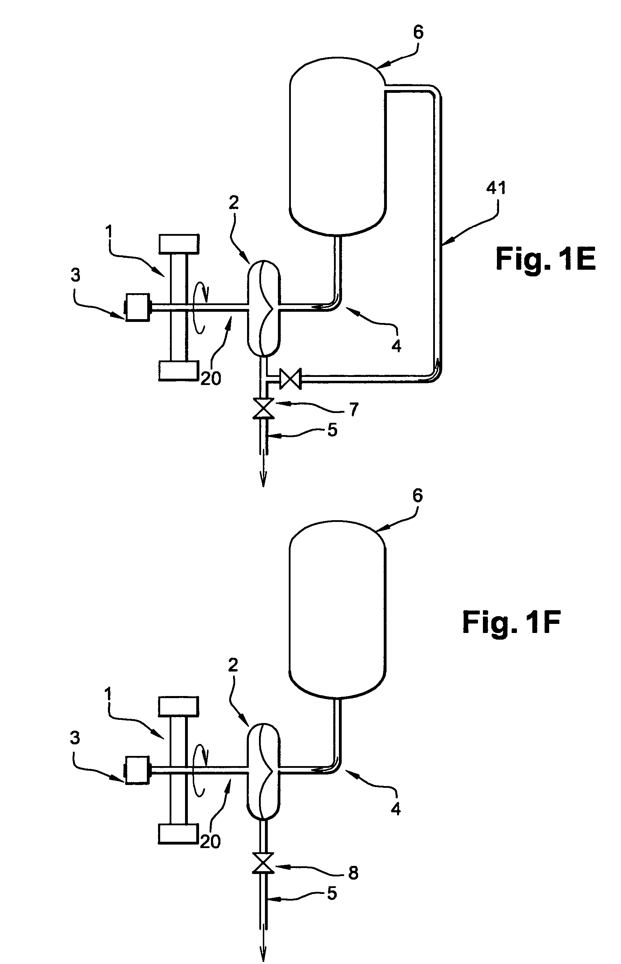

Une deuxième méthode permettant de limiter la variation du débit consiste à utiliser une régulation de débit dite "en canard" comme représentée par le mode de réalisation de la figure 1E.

Cette méthode de régulation de débit consiste à prélever un débit variable par une vanne 7 sur le flux sortant de la pompe 2 et à le renvoyer dans le réservoir 6 par une conduite de retour 41.

La vanne 7 est éventuellement une vanne trois voies réduisant le débit dans la tubulure de sortie 5 lorsqu'il y a lieu de renvoyer une partie de l'ergol vers le réservoir 6 par la conduite de retour 41.

Dans le cas d'une variation de vitesse de 100% à 50%, la moitié du débit est prélevée au début, et on diminue le prélèvement au long du fonctionnement jusqu'à un prélèvement nul lorsque la roue atteint sa vitesse minimale. Dans ce cas une partie de l'énergie transmise aux fluides est perdue, néanmoins le bilan demeure favorable.

L'expérience montre que au lieu de disposer de 75% de l'énergie de la roue, on n'en dispose plus que de 54%, ce qui conduit là aussi utiliser à une roue de masse plus grande.

Compte tenu de l'accroissement de la masse de la roue, ces approches n'ont de sens que si le moteur fusée n'accepte pas plus de 30 à 40 % de variation de débit.

Une troisième méthode de régulation du débit consiste à réaliser un ajustement du débit par des vannes réglables sur les conduites d'entrée et/ou de sortie de la pompe.

Elle est mise en oeuvre dans l'exemple de réalisation illustré à la figure 1 F qui comporte une vanne 8 sur la tubulure de sortie 5 de la pompe 2.

Cette méthode à un impact sur la pression délivrée par la pompe à cause des pertes de charge variables qu'elle introduit.

C'est toutefois une solution efficace si l'on souhaite conserver un débit constant avec une pression de chambre qui diminue dans le temps. En effet une vanne réglable placée à la sortie de la pompe permet de régler le débit en créant aussi une perte de charge. En supposant par exemple une roue dont la vitesse varie d'un rapport 2 durant le vol propulsé, la pression générée par la pompe au début du vol est le quadruple de celle engendrée à la fin.

En couplant la pompe 2 à une vanne 8 qui maintient un débit constant en s'ouvrant progressivement jusqu'à s'effacer complètement à la fin, la vanne 8 absorbe alors par perte de charge la moitié de la pression, et réduit le débit de moitié.

La chambre moteur est alors alimentée par un débit quasi constant, à une pression qui diminue dans le temps, ce qui est favorable à la diminution des accélérations subies par le véhicule durant le vol.

Ainsi, en fonction des caractéristiques du moteur fusée que l'on souhaite alimenter on utilisera le schéma le plus adapté parmi les diverses variantes définies aux figures 1A à 1F tout en conservant la possibilité de combiner les caractéristiques de ces variantes selon le cas.

A titre d'exemple de réalisation on considèrera les hypothèses suivantes correspondant à un cas concret de réalisation dans le cas d'un avion spatial:

Le moteur fusée utilise du méthane liquide (LCH4) et de l'oxygène liquide (LOx), il fonctionne correctement à une pression de 15 à 30 bars, il fonctionne pendant une durée de l'ordre de 80 secondes et nécessite 6 tonnes d'ergols.

En outre, la vitesse de pompe est de l'ordre de 15 000 tours/mn. Cette vitesse est commune pour les pompes LOx.

Dans cet exemple, on choisit un réservoir de l'ordre de 2,5 m de diamètre à une pression de 5 bar ce qui permet de ne pas entraîner de trop grandes contraintes structurales sur un tel réservoir.

En effet, en supposant une épaisseur de peau du réservoir de l'ordre de 3 mm, une pression de 5 bars conduit à une contrainte en partie cylindrique courante inférieure à 200 MPa selon l'équation $\sigma = PR/e$.

En considérant un réservoir construit en aluminium de type 2219T87, ($\sigma$ yield = 407 Mpa), cela conduit à un facteur de sécurité supérieur à 2.

Comme on l'a vu plus haut, le moteur fonctionne à une pression de 30 bar au début du vol pour 15 bar à la fin.

L'approche choisie est de fonctionner avec une régulation de débit du flux d'ergols à une valeur constante par le moyen de la vanne 8 placée en aval de la pompe.

Le graphe de la figure 5 résume le comportement de roue et de la pompe dans une telle configuration.

La vitesse 9 de la roue a été rapportée à la vitesse initiale, elle décroît de 100% à 50%.

Les pressions, pression réservoir 9, pression sortie pompe 12, pression d'alimentation de la chambre 14 sont rapportées à la pression initiale de sortie pompe. On remarque que la perte de charge ou chute de pression 13 imposée par la vanne pilotée est de 40% au début et décroît rapidement pour s'annuler à la fin.

La pression d'alimentation de la chambre 14 décroît aussi de moitié durant la propulsion ce qui assure une poussée décroissante compensée par la réduction de masse du véhicule engendrée par la consommation d'ergols. Le débit d'ergols 15 est constant.

Le rendement de la pompe est de l'ordre de 70% ce qui est une valeur conservative.

Des exemples de réalisation de roues d'inertie sont donné aux figures 3A à 3C.

La roue comporte un bandeau 16 qui est réalisé dans une fibre de carbone de haute résistance de limite à rupture 2300 Mpa, de densité de l'ordre de 1750g/dm3, avec une contrainte maximale acceptable 1500 Mpa en respectant un coefficient de sécurité de 1,5 et comporte une bande de composite d'environ 10 cm d'épaisseur et de largeur.

Elle comporte une jante 17 et un moyeu 18, permettant de la rendre solidaire d'un axe de rotation et réalisés en alliage léger.

Pour définir les dimensions de la roue on part des paramètres nécessaires au fonctionnement du moteur fusée et notamment de l'énergie requise pour comprimer les ergols.

La masse d'ergols à comprimer est de l'ordre de 6000 kg ce qui correspond à un volume de 7.5 m3 environ.

Comme l'énergie requise pour la compression des ergols est au premier ordre fonction uniquement du volume ($E= V.\Delta P$), on ne distingue pas les deux ergols et l'on cherche la masse de la roue capable de motoriser les pompes LOx et LCH4.

Dans une telle application avec carburant et comburant la roue est éventuellement scindée en deux pour avoir une roue par pompe.

Pour une vitesse de rotation de 15000 t/mn, le diamètre maximum acceptable de la roue est :

$$R = 1/\omega\sqrt{\sigma/\rho} = 0.585 \text{ m}.$$

L'énergie requise pour comprimer les ergols s'exprime nominalement par l'intégrale sur le temps du débit multiplié par le différentiel de pression fourni par la pompe et par son rendement. Le calcul donne une valeur de l'ordre de 24MJ.

Il y a lieu de noter que génération de cette énergie requiert une puissance de 580 KW au début de la phase propulsée.

En supposant que l'énergie de la roue est captée entre sa pleine vitesse et le point où elle atteint une demi vitesse, 75% de son énergie est disponible, il est donc nécessaire que la roue stocke environ 32 MJ ce qui conduit dans les conditions de l'exemple à une masse de l'ordre de 80,5 kg.

A la masse de la roue d'inertie, il convient d'ajouter les autres masses en rotation (jante, arbre, rotor pompe, rotor moteur électrique d'entraînement) que l'on estime forfaitairement à une vingtaine de kg, et les masses fixes (carter, stator moteur électrique, divergent pompe, tuyauteries...) estimées aussi à une vingtaine de kg.

Bien que les masses en rotation participent aussi pour une valeur faible à l'énergie cinétique, celles-ci ne sont pas prises en compte par souci de simplification.

En outre, la réglementation demande que la roue tourne dans un carter qui soit en mesure de retenir les projectiles provenant d'un éclatement de la roue. Une estimation basée sur la méthode « Punch equation » NASA standard SSP 52005B donne que des morceaux de 2 kg de composite propulsés à 900m/s seront arrêtés par une paroi de 8 cm d'aluminium. Cela conduit à un carter comportant un bouclier de 20 à 25 kg entre la roue et le réservoir.

Au total, selon l'exemple décrit, le dispositif a une masse conservatoire de 150 kg environ pour l'ensemble pompes, roue(s) et accessoires.

En sus des avantages de simplicité et de fiabilité, la motorisation par roue d'inertie permet d'éviter les contraintes inhérentes à une technique n'utilisant pas de turbopompe mais utilisant des réservoirs d'ergols sous pression.

La présente invention permet de s'affranchir de la complexité de réalisation d'une telle solution à réservoirs pressurisés, du temps de développement nécessaire pour les réaliser, de leur fragilité et des problèmes dus à la pressurisation de ces réservoirs.

La motorisation par roue d'inertie de la présente invention permet d'utiliser des réservoirs basse pression éventuellement structuraux.

Pour mémoire, la pressurisation des réservoirs fait appel au stockage d'un gaz permettant de pressuriser les réservoirs d'ergols et les réservoirs structuraux sont des réservoirs capable d'assurer la tenue longitudinale du véhicule alors que les autres réservoirs doivent être fixés à un châssis porteur.

Le tableau ci-dessous montre une comparaison de trois solutions remplissant la fonction stockage de 6 tonnes d'ergols, une pressurisation en entrée moteur à 25 bar en moyenne et un étage fusée de 5 m environ.

|  | Réservoirs structuraux 25 bar alu (kg) | Réservoirs 25 bar composites | Réservoirs structuraux 5 bar alu |
|---|---|---|---|
| Réservoirs (kg) | 2050 | 1000 | 700 |
| Supports (kg) | 0 | 50 | 0 |
| Etage (5m) (kg) | 50 | 500 | 50 |
| Pompes (kg) | 0 | 0 | 150 |
| Réservoir pressurisation (kg) | 500 | 500 | 100 |
| Total (kg) | 2600 | 2050 | 1000 |

Le gain apporté par la solution réservoirs structuraux basse pression avec pompes motorisées par roue d'inertie est de l'ordre de 1 tonne par rapport à la solution à réservoirs structuraux haute pression.

La présente invention possède des applications dans le domaine de l'astronautique, et plus généralement tous les secteurs utilisant la propulsion par moteur fusée à ergols liquides et ceux où un débit de fluide très important est requis pendant un temps relativement court.

Elle est particulièrement intéressante quand les propergols sont cryogéniques (oxygène liquide avec Hydrogène, Méthane ou kérosène liquides) et particulièrement adaptée aux véhicules suborbitaux réutilisables, pour lesquels la masse totale de l'ensemble pompe n'est pas critique, et pour lesquels la fiabilité et la facilité de maintenance sont primordiaux.

Par contre la présente invention a de nombreux avantages tels que la simplicité de sa conception, des coûts de développement et de réalisation réduits, une très grande fiabilité, une vitesse de pompage stabilisée et une possibilité de réutilisation de l'ensemble pompe très importante alors que les turbopompes actuelles ne sont capables au mieux que de quelques démarrages.

La présente invention a été décrite ici a titre d'exemple dans le cadre de l'utilisation d'une roue d'inertie pour la motorisation fusée d'un avion spatial. Dans un tel véhicule la propulsion fusée n'est utilisée qu'après un vol du type de celui d'un avion.

L'invention peut toutefois être utilisée pour toute application d'un moteur fusée, que ce soit un étage de lanceur, un véhicule interplanétaire ou un satellite, dans la mesure évidemment où le remplacement d'une turbopompe d'alimentation du moteur fusée est avantageux.

Les schémas fournis ne sont que des exemples de réalisation et notamment, certaines caractéristiques décrites dans les figures 1A à 1F peuvent être combinées tout en restant dans le cadre de l'invention définie dans par les revendications.

Par exemple, il est possible de considérer l'utilisation d'un dispositif à embrayage 21 selon la figure 1B avec une alimentation électrique du moteur 3 interne comme à la figure 1D ou une alimentation électrique externe comme à la figure 1C.

De même, un dispositif comportant une régulation de débit par vannes comme représenté aux figures 1E et 1 F peu être complété par un embrayage 21 et un moteur électrique 3 à alimentation interne ou externe, l'alimentation du moteur par alimentation interne permettant le lancement de la roue dans une phase de vol quelconque, pompe débrayée, l'alimentation du moteur fusée pompe embrayée, puis lorsque la vitesse de rotation de la roue n'est plus suffisante, un débrayage de la pompe et un fonctionnement de la roue en roue libre pour conserver une stabilisation gyroscopique.

**Revendications**

1. - Dispositif de motorisation de pompe (2) d'alimentation de moteur fusée de véhicule spatial **caractérisé en ce qu'**il comprend une roue d'inertie (1) et un moyen de transmission de la rotation de la roue d'inertie à la pompe, la roue étant couplée mécaniquement à la pompe.

2. - Dispositif de motorisation de pompe d'alimentation de moteur fusée selon la revendication 1 **caractérisé en ce que** le moyen de transmission est un arbre commun (20) entre la roue d'inertie et la pompe.

3. - Dispositif de motorisation de pompe d'alimentation de moteur fusée selon la revendication 1 ou 2 **caractérisé en ce que** le moyen de transmission comporte un dispositif d'embrayage (21) adapté à coupler et découpler la roue d'inertie de la pompe.

4. - Dispositif de motorisation de pompe d'alimentation de moteur fusée selon l'une des revendications 1 à 3 **caractérisé en ce que** le moyen de transmission comporte un dispositif de modification du rapport d'entraînement entre roue et pompe.

5. - Dispositif de motorisation de pompe d'alimentation de moteur fusée selon l'une des revendications précédentes **caractérisé en ce qu'**il comporte un moteur électrique (3) de lancement de la roue.

6. - Dispositif de motorisation de pompe d'alimentation de moteur fusée selon la revendication 5 **caractérisé en ce que** le moteur électrique (3) est alimenté par une source électrique (A1) extérieure au véhicule.

7. - Dispositif de motorisation de pompe d'alimentation de moteur fusée selon la revendication 5 ou 6 **caractérisé en ce que** le moteur électrique est alimenté par une source électrique (A2) interne au véhicule, le moteur électrique permettant de conserver à la roue une énergie après le décollage du véhicule.

8. - Dispositif de motorisation de pompe d'alimentation de moteur fusée selon l'une des revendications précédentes **caractérisé en ce que** la pompe et la roue sont disposées dans le véhicule dans une position fournissant une stabilisation gyroscopique par leur rotation suivant au moins un axe du véhicule.

9. - Dispositif de motorisation de pompe d'alimentation de moteur fusée selon l'une des revendications 1 à 7 **caractérisé en ce qu'**il comporte au moins une paire de roues identiques tournant en sens inverse pour supprimer les effets gyroscopiques de rotation des roues.

10. - Dispositif de motorisation de pompe d'alimentation de moteur fusée selon l'une des revendications précédentes **caractérisé en ce qu'**il comporte des moyens de mesure de la vitesse de rotation de la roue et des moyens (21) de désaccouplement de la roue (1) et de la pompe (2) pour une vitesse inférieure à une vitesse donnée inférieure à la vitesse de rotation nominale de la roue.

11. - Dispositif de motorisation de pompe d'alimentation de moteur fusée selon l'une des revendications précédentes **caractérisé en ce qu'**il comporte des moyens de régulation de débit de la pompe (2) comportant un dispositif de prélèvement (7) d'un débit variable sur le flux sortant de la pompe et de renvoi de ce flux dans le réservoir (6).

12. - Dispositif de motorisation de pompe d'alimentation de moteur fusée selon l'une des revendications précédentes **caractérisé en ce qu'**il comporte des moyens de régulation de débit de la pompe (2) comportant une vanne (8) placée en aval de la pompe (2).

13. - Dispositif de motorisation de pompe d'alimentation de moteur fusée selon la revendication 12 **caractérisé en ce que** la vanne (8) est une vanne réglable placée à la sortie de la pompe (2) et adaptée à maintenir un débit constant en s'ouvrant progressivement.

14. - Dispositif de motorisation de pompe d'alimentation de moteur fusée selon l'une quelconque des revendications précédentes **caractérisé en ce que** la roue est disposée dans un carte formant bouclier entre la roue et le réservoir.

15. - Dispositif d'alimentation de moteur fusée **caractérisé en ce qu'**il comporte au moins deux pompes chacune motorisée par un dispositif selon l'une des revendications précédentes.

16. - Dispositif d'alimentation de moteur fusée **caractérisé en ce qu'**il comporte au moins une pompe motorisée par un dispositif selon l'une des revendications 1 à 14 et des réservoirs structuraux basse pression.

17. - Avion spatial comportant un moteur fusée dont l'alimentation comprend au moins une pompe motorisée par un dispositif selon l'une quelconque des revendications 1 à 14 et des moyens (A2, 3, 21) de mise en fonction du dispositif, avion en vol.

**EP 2 198 144 B1**

**Claims**

1. Device for powering the feed pump (2) of a rocket engine of a spacecraft, **characterized in that** it comprises an inertia wheel (1) and a means of transmitting the rotation of the inertia wheel to the pump, the wheel being mechanically coupled to the pump.

2. Device for powering the feed pump of a rocket engine according to Claim 1, **characterized in that** the transmission means is a common shaft (20) between the inertia wheel and the pump.

3. Device for powering the feed pump of a rocket engine according to Claim 1 or 2, **characterized in that** the transmission means includes a clutch device (21) suitable for coupling and decoupling the inertia wheel to and from the pump.

4. Device for powering the feed pump of a rocket engine according to one of Claims 1 to 3, **characterized in that** the transmission means includes a device for modifying the drive ratio between wheel and pump.

5. Device for powering the feed pump of a rocket engine according to one of the preceding claims, **characterized in that** it includes an electric motor (3) for starting the wheel.

6. Device for powering the feed pump of a rocket engine according to Claim 5, **characterized in that** the electric motor (3) is powered by an electricity source (A1) external to the craft.

7. Device for powering the feed pump of a rocket engine according to Claim 5 or 6, **characterized in that** the electric motor is powered by an electricity source (A2) internal to the craft, the electric motor making it possible to retain an energy in the wheel after the craft has taken off.

8. Device for powering the feed pump of a rocket engine according to one of the preceding claims, **characterized in that** the pump and the wheel are arranged in the craft in a position supplying a gyroscopic stabilization by their rotation according to at least one axis of the craft.

9. Device for powering the feed pump of a rocket engine according to one of Claims 1 to 7, **characterized in that** it includes at least one pair of identical wheels rotating in reverse directions to eliminate the rotational gyroscopic effects of the wheels.

10. Device for powering the feed pump of a rocket engine according to one of the preceding claims, **characterized in that** it includes means for measuring the speed of rotation of the wheel and means (21) for decoupling the wheel (1) and the pump (2) for a speed less than a given speed less than the nominal speed of rotation of the wheel.

11. Device for powering the feed pump of a rocket engine according to one of the preceding claims, **characterized in that** it includes means for regulating the throughput of the pump (2) comprising a device (7) for taking off a variable throughput from the flow leaving the pump and for returning this flow to the tank (6).

12. Device for powering the feed pump of a rocket engine according to one of the preceding claims, **characterized in that** it includes means for regulating the throughput of the pump (2) comprising a valve (8) placed downstream of the pump (2).

13. Device for powering the feed pump of a rocket engine according to Claim 12, **characterized in that** the valve (8) is an adjustable valve placed at the outlet of the pump (2) and suitable for maintaining a constant throughput by being opened progressively.

14. Device for powering the feed pump of a rocket engine according to any one of the preceding claims, **characterized in that** the wheel is arranged in a shield-forming housing between the wheel and the tank.

15. Device for feeding a rocket engine, **characterized in that** it comprises at least two pumps, each powered by a device according to one of the preceding claims.

16. Device for feeding a rocket engine, **characterized in that** it comprises at least one pump powered by a device according to one of Claims 1 to 14 and low-pressure structural tanks.

17. Spacecraft comprising a rocket engine whose feed comprises at least one pump powered by a device according to any one of Claims 1 to 14 and means (A2, 3, 21) for operating the device, with the craft in flight.

**Patentansprüche**

1. Antriebsvorrichtung einer Kraftstoffpumpe (2) eines Raketenmotors eines Raumfahrzeugs, **dadurch gekennzeichnet, dass** sie ein Schwungrad (1) und eine Übertragungseinrichtung der Drehung des Schwungrads auf die Pumpe enthält, wobei das Rad mechanisch mit der Pumpe gekoppelt ist.

2. Antriebsvorrichtung einer Kraftstoffpumpe eines Raketenmotors nach Anspruch 1, **dadurch gekennzeichnet, dass** die übertragungseinrichtung eine gemeinsame Welle (20) zwischen dem Schwungrad und der Pumpe ist.

3. Antriebsvorrichtung einer Kraftstoffpumpe eines Raketenmotors nach Anspruch 1 oder 2, **dadurch gekennzeichnet, dass** die übertragungseinrichtung eine Kupplungseinrichtung (21) aufweist, die geeignet ist, um das Schwungrad der Pumpe zu kuppeln und abzukuppeln.

4. Antriebsvorrichtung einer Kraftstoffpumpe eines Raketenmotors nach einem der Ansprüche 1 bis 3, **dadurch gekennzeichnet, dass** die Übertragungseinrichtung eine Vorrichtung zum Ändern des Antriebsverhältnisses zwischen Rad und Pumpe aufweist.

5. Antriebsvorrichtung einer Kraftstoffpumpe eines Raketenmotors nach einem der vorhergehenden Ansprüche, **dadurch gekennzeichnet, dass** sie einen Elektromotor (3) für den Start des Rads aufweist.

6. Antriebsvorrichtung einer Kraftstoffpumpe eines Raketenmotors nach Anspruch 5, **dadurch gekennzeichnet, dass** der Elektromotor (3) von einer Stromquelle (A1) außerhalb des Fahrzeugs gespeist wird.

7. Antriebsvorrichtung einer Kraftstoffpumpe eines Raketenmotors nach Anspruch 5 oder 6, **dadurch gekennzeichnet, dass** der Elektromotor von einer Stromquelle (A2) innerhalb des Fahrzeugs gespeist wird, wobei der Elektromotor es ermöglicht, nach dem Abheben des Fahrzeugs eine Energie für das Rad beizubehalten.

8. Antriebsvorrichtung einer Kraftstoffpumpe eines Raketenmotors nach einem der vorhergehenden Ansprüche, **dadurch gekennzeichnet, dass** die Pumpe und das Rad im Fahrzeug in einer Stellung angeordnet sind, die eine gyroskopische Stabilisierung durch ihre Drehung gemäß mindestens einer Achse des Fahrzeugs liefert.

9. Antriebsvorrichtung einer Kraftstoffpumpe eines Raketenmotors nach einem der Ansprüche 1 bis 7, **dadurch gekennzeichnet, dass** sie mindestens ein Paar von gleichen Rädern aufweist, die in Gegenrichtung drehen, um die gyroskopischen Drehwirkungen der Räder zu unterdrücken.

10. Antriebsvorrichtung einer Kraftstoffpumpe eines Raketenmotors nach einem der vorhergehenden Ansprüche, **dadurch gekennzeichnet, dass** sie Einrichtungen zum Messen der Drehgeschwindigkeit des Rads und Einrichtungen (21) zum Entkuppeln des Rads (1) und der Pumpe (2) bei einer Geschwindigkeit geringer als eine gegebene Geschwindigkeit geringer als die Nenndrehgeschwindigkeit des Rads aufweist.

11. Antriebsvorrichtung einer Kraftstoffpumpe eines Raketenmotors nach einem der vorhergehenden Ansprüche, **dadurch gekennzeichnet, dass** sie Einrichtungen zur Durchsatzregelung der Pumpe (2) aufweist, die eine Vorrichtung (7) zur Entnahme eines variablen Durchsatzes am aus der Pumpe austretenden Fluss und zur Rückführung dieses Flusses in den Tank (6) aufweisen.

12. Antriebsvorrichtung einer Kraftstoffpumpe eines Raketenmotors nach einem der vorhergehenden Ansprüche, **dadurch gekennzeichnet, dass** sie Einrichtungen zur Durchsatzregelung der Pumpe (2) aufweist, die ein Ventil (8) aufweisen, das hinter der Pumpe (2) angeordnet ist.

13. Antriebsvorrichtung einer Kraftstoffpumpe eines Raketenmotors nach Anspruch 12, **dadurch gekennzeichnet, dass** das Ventil (8) ein einstellbares Ventil ist, das am Ausgang der Pumpe (2) angeordnet und geeignet ist, um einen konstanten Durchsatz aufrechtzuerhalten, indem es sich progressiv öffnet.

14. Antriebsvorrichtung einer Kraftstoffpumpe eines Raketenmotors nach einem der vorhergehenden Ansprüche, **da-**

**durch gekennzeichnet, dass** das Rad in einem Gehäuse angeordnet ist, das einen Schutzschild zwischen dem Rad und dem Tank bildet.

15. Vorrichtung zur Kraftstoffversorgung eines Raketenmotors, **dadurch gekennzeichnet, dass** sie mindestens zwei Pumpen aufweist, von denen jede durch eine Vorrichtung gemäß einem der vorhergehenden Ansprüche angetrieben wird.

16. Vorrichtung zur Kraftsteffversorgung eines Raketenmotors, **dadurch gekennzeichnet, dass** sie mindestens eine von einer Vorrichtung nach einem der Ansprüche 1 bis 14 angetriebene Pumpe und Niederdruck-Integraltanks aufweist.

17. Raumgleiter, der einen Raketenmotor aufweist, dessen Kraftstoffversorgung mindestens eine von einer Vorrichtung gemäß einem der Ansprüche 1 bis 14 angetriebene Pumpe und Einrichtungen (A2, 3, 21) zur Inbetriebnahme der Vorrichtung bei fliegendem Gleiter enthält.

**Fig. 1A**

**Fig. 1B**

**Fig. 1C**

**Fig. 1D**

**Fig. 1E**

**Fig. 1F**

**Fig. 2A**

**Fig. 2B**

18    17

**Fig. 3A**                                    16

17

**Fig. 3B**    18                              16

17

**Fig. 3C**                                    16

18

Caractéristiques d'une pompe centrifuge
à aubes radiales fonctionnant à l'eau
N=11500 t/mn
Ns=73

Fig. 4

EP 2 198 144 B1

Comportement pompe et roue

**Fig. 5**

**EP 2 198 144 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6457306 B

19